# EUROPÄISCHE PATENTSCHRIFT

(11) **EP 0 673 863 B1**
(45) Veröffentlichungstag und Bekanntmachung des Hinweises auf die Patenterteilung: **13.01.1999**
(21) Anmeldenummer: 95102312.6
(22) Anmeldetag: 18.02.1995
(51) Int. Cl.: B65G 47/26, B65G 13/075

(54) **Bausatz zum Bremsen der Tragrollen von Rollenförderern**
Structural assembly for bracking support rollers of roller conveyors
Ensemble structural pour le freinage des rouleaux supports des conveyeurs à rouleaux

(30) Priorität: 23.03.1994 DE 4409968
(43) Veröffentlichungstag der Anmeldung: 27.09.1995
(73) Patentinhaber: Gebhardt Fördertechnik GmbH, D-74889 Sinsheim (DE)
(72) Erfinder: Gebhardt, Günter, D-74915 Waibstadt (DE)
(74) Vertreter: Schmid, Rudolf, Dipl.-Ing., Patentanwalt

(56) Entgegenhaltungen:
- EP-A- 0 367 304
- AT-A- 384 595
- DE-A- 1 481 291
- DE-C- 3 503 052
- DE-C- 3 817 388
- DE-U- 9 404 932
- US-A- 4 204 593

## Beschreibung

Die Erfindung betrifft einen Bausatz zum Bremsen der Tragrollen von Rollenförderern gemäß des Oberbegriffs des Anspruchs 1. Ein solcher Bausatz ist z.B. aus der EP-A-0 367 304 bekannt.

Staurollenförderer sind Transportlagen, auf denen Stückgut von verschiedenen Pack- und Abfertigungsplätzen transportiert wird. Gegenüber den einfachen Rollenförderern wird bei Staurollenförderern ein Stückgutstau erkannt und gegebenenfalls der Antrieb der Tragrollen sektionsweise ausgesetzt. Hierzu sind die verschiedensten Schaltmechanismen entwickelt worden. Eine oft und bewährt eingesetzte Antriebsmechanik besteht hierbei aus Zwischenrollen. Während der Transportbewegung wirken die Stückgüter auf einen in die Förderbahn ragenden Fühler ein, welche Teile der Antriebseinheiten in Eingriff oder Ausgriff mit den Fördermitteln bringt, um die Förderleistung entsprechend den jeweiligen örtlichen Gegebenheiten zu manipulieren.

Es gibt dabei Staurollenbahnen, bei denen die Zwischenrolle ein Kettenrad aufweist, das in einer umlaufenden Kette kämmt. Das mit der Tragrolle in Antriebsverbindung bringbare Treibrad kann beispielsweise als Zahnrad ausgebildet sein. Hierdurch entsteht eine zweifache formschlüssige Antriebsübertragung, die einen sicheren und zügigen Transport des Stückgutes gewährleistet.

Aus der DE-PS 26 50 205 ist eine solche Staurollenbahn bekannt.

Wenn die auf dem Prinzip des Form- oder auch Reibschlusses arbeitende Antriebsmittel mit den Tragrollen außer Eingriff gesetzt werden, rollen diese frei drehenden Tragrollen aus, was eine Zeitverzögerung hinsichtlich des Transportgutstops mit sich zieht.

Die EP-A-0 367 304 offenbart eine Steuerung für eine Fördereinrichtung mit Tragrollen, die von einem Förderband angetrieben werden. Das Förderband kann von Spannungsrollen gegen die Tragrollen gedrückt werden. Ein Bremsschuh ist auf einer Welle montiert und wird von einem Betätigungselement gegen die Tragrollen gedrückt. Nachteilig bei dieser Steuerung gemäß der EP-A-0 367 304 ist die aufwendige Konstruktion für die Bremsbetätigung der Tragrollen.

Der vorliegenden Erfindung liegt daher die Aufgabe zugrunde, Mittel zu schaffen, mit denen dieses Ausrollen und somit hierdurch bedingten Bremsverzögerungen eliminiert werden können. Darüber hinaus soll der Bausatz universell für die verschiedensten Tragrollenabstände verwendbar sein.

Diese Aufgabe wird erfindungsgemäß durch einen Bausatz nach dem vorgeschlagenen Anspruch 1 gelöst.

Durch die Schaffung eines Bausatz zum Bremsen der Tragrollen von Rollenförderern ist insbesondere der nachträgliche Einbau in bereits bestehende Anlagen ermöglicht.

Der Bausatz wird dabei so montiert, daß er die Kipp- oder Schwenkbewegungen der Antriebsmittel bzw. der Zwischenrollen ausnutzen bzw. diese mit vollziehen. Somit ist stets eine synchrone Arbeitsweise des Bremsbausatzes mit den Antriebszwischenrädern gewährleistet.

Dies bedeutet, daß wenn durch das auf den Tragrollen transportierte Stückgut in die Transportbahn ragende Schaltzungen betätigt und beispielsweise ein Stückgutstau anzeigt, werden in herkömmlicherweise gegebenenfalls sektionsweise die Antriebe außer Kraft gesetzt werden. Durch die erfindungsgemäße Anordnung des Bremsbausatzes auf den Schaltmitteln, die durch die Schaltzungen über das Transportgut betätigt werden, wird also nur dann eine Bremsaktivierung erfolgen, wenn dies die Staurollenbahn selbsttätig signalisiert und erfordert.

Der Bausatz ist aus einem, auf das in oder außer Eingriff mit einer Tragrolle bringbare Antriebsmittel montierbaren und mit diesen verschwenk- oder verschiebbaren Lamellenhalter mit mindestens einer, eine Tragrolle beaufschlagbaren Bremslamelle geschaffen. Der Lamellenhalter sieht einen Achskörperaufnahmebereich und eine mehrzahl von Bremslamellenaufnahmebereichen vor.

Der Achskörperaufnahmebereich ist hierbei derart ausgebildet, daß er aus einer, die Schwenk- oder Kippachse des Antriebsmittels oder dessen Schwenkgehäuse zumindest teilweise umgreifenden Lagerschale besteht. Der Bremslamellenaufnahmebereich sieht zum Einsetzen und Befestigen der Bremslamellen mehrere Taschen vor.

Durch diese erfindungsgemäße Anordnung sind die Bremslamellen in eine Freilauf- und eine Bremsstellung schwenkbar, wobei diese Schwenkbewegung synchron mit der Staurollenfunktion abläuft.

Anhand der beigefügten Zeichnung, die ein besonders bevorzugtes Ausführungsbeispiel der Erfindung zeigt, wird diese nun näher beschrieben:

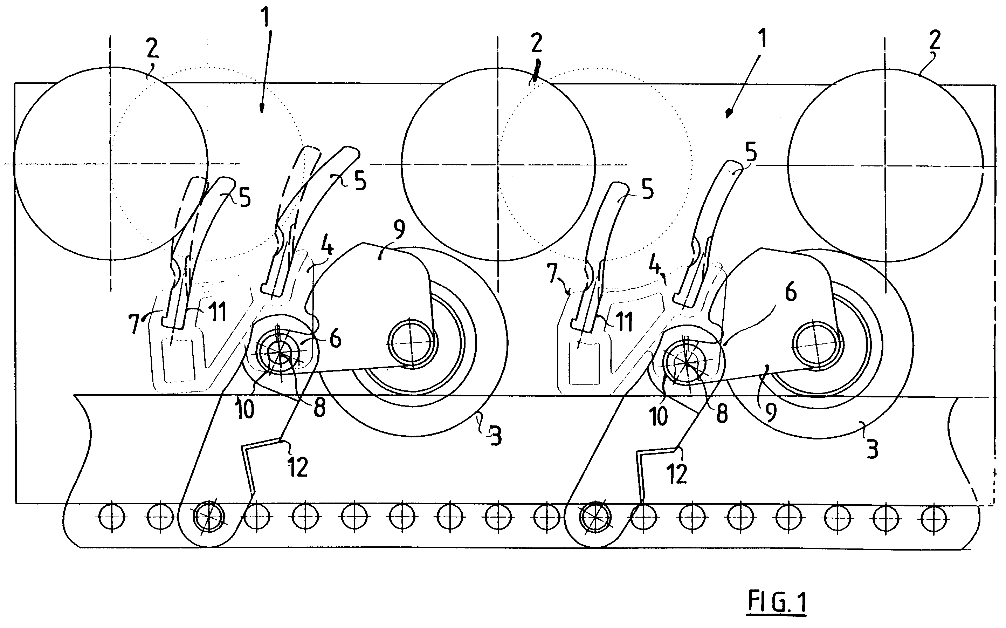

In Figur 1 ist mit dem Bezugszeichen 1 der Gesamtbausatz gekennzeichnet. Erfindungsgemäß besteht dieser aus einem Lamellenhalter 4 und mindestens einer Bremslamelle 5.

In diesem Ausführungsbeispiel sind im Lamellenhalter 4 zwei Bremslamellen 5 eingesetzt, so daß der erfindungsgemäße Bausatz 1 universell für die verschiedensten Tragrollenabstände verwendbar ist. Im Sinne der Erfindung liegt, daß der Lamellenhalter 4 derart ausgebildet ist, daß er eine Vielzahl von Lamellenaufnahmebereiche 7 aufweist, die durch mehrere hintereinander angeordnete Taschen 11 gebildet sind.

Die Lamellenhalter 4 sind über eine Lagerschale 10, welche den Achskörperaufnahmebereich 6 bilden, auf den Schwenk- oder Ausrückteilen der Antriebsmittel 3 befestigt. Die Bremslamellen 5 ragen fingerförmig zwischen die Tragrollen 2. Das Antriebsmittel 3 kann durch eine Zwischenrolle gebildet sein, welche beispielsweise über einen hier nicht näher angedeuteten Riemen oder einer Kette ständig in Umlauf versetzt wird. Wird durch das Stückgut selbst über entsprechende in die Förderbahn ragende Fühler ein Schaltsignal ausgelöst, wird das Antriebsmittel 3 von einer Ineingriffstellung (rechte Bildhälfte) in eine Außereingriffstellung (linke Bildhälfte) versetzt. In der Ineingriffstellung (Bild rechts) wird auch die Tragrolle 2 ständig in Umlauf gesetzt. Bei der Außereingriffstellung (linke Bildhälfte) wirkt keine Antriebskraft des Antriebsmittels 3 auf die Tragrolle 2. Diese wird nun herkömmlicherweise ausrollen. Trägt nun das Antriebsmittel 3 bzw. dessen Kippgestänge 12 den erfindungsgemäßen Bausatz 1 so vollzieht dieser mit dem Antriebsmittel 3 bzw. seinem Gestänge 12 dessen Bewegung, was zur Staurollenfunktion erforderlich ist. Synchron hierzu verfährt somit auch die Bremslamelle 5, welche bei einer Stellung des Antriebsmittels 3, in der dieses außer Eingriff mit der Tragrolle 2 ist, also bei einer Stellung, in der die Tragrolle 2 stoppen soll, in eine Bremsstellung, wobei die Bremslamelle 5 auf die Tragrolle 2 einwirkt.

Somit werden Verzögerungen hinsichtlich der Staurollenfunktion bzw. Bremsfunktion eliminiert.

### Bezugszeichenliste

- 1: Bausatz
- 2: Tragrollen
- 3: Antriebsmittel
- 4: Lamellenhalter
- 5: Bremslamelle
- 6: Achskörperaufnahmebereich
- 7: Bremslamellenaufnahmebereich
- 8: Schwenk- oder Kippachse des Antriebsmittels 3
- 9: Schwenkgehäuse
- 10: Lagerschale
- 11: Tasche
- 12: Schwenk- oder Kippgestänge von 3

## Patentansprüche

1. Bausatz zum Bremsen der Tragrollen von Rollenförderern, insbesondere von Staurollenförderern, die antreibbare und frei drehende Tragrollen aufweisen, auf denen das Stückgut gegebenenfalls unter Betätigung von Schaltzungen transportiert wird, welche Antriebsmittel für die angetriebenen Tragrollen außer Eingriff mit diesen versetzen,
**dadurch gekennzeichnet, daß**
der Bausatz (1) einen verschwenk- oder verschiebbaren Lamellenhalter (4) mit mindestens einer eine Tragrolle (2) beaufschlagenden Bremslamelle (5) aufweist, die in oder außer Eingriff mit einer Tragrolle (2) bringbar ist, und der Lamellenhalter (4) einen Achskörperaufnahmebereich (6) aufweist und auf dem Antriebsmittel (3) montiert ist, und der Achskörperaufnahmebereich (6) des Lamellenhalters (4) eine die Schwenk- oder Kippachse (8) des Antriebsmittels (3) oder dessen Schwenkgehäuse zumindest teilweise umgreifende Lagerschale (10) aufweist, und
der Lamellenhalter (4) eine Vielzahl von Bremslamellenaufnahmebereichen (7) aus mehreren hintereinander angeordneten Taschen (11) aufweist.

## Claims

1. Unit for braking of support rollers in gravity roller tables, particularly in accumulating roller conveyors having propelled and freely rotating support rollers on which the load can also be moved by activating switching wedges which use the latter to shift the drives for the support rollers driven out of engagement,
characterised by the fact that,
the unit (1) has a disk bracket (4), which can be swivelled or moved, with at least one brake disk (5) clutching a support roller, which brake disk can be engaged into or disengaged from a supporting roller (2), and where the disk bracket (4) has an axle shaft receptacle area (6) and is mounted on the drive (3), and where the axle shaft receptacle area (6) of the disk bracket (4) has a pillow (10) which at least partially encompasses the swivel or tilting axle (8) of the drive (3) or its swivel casing, and the disk bracket (4) has a plurality of brake disk receptacle areas (7) having several successively laid out pockets (11).

## Revendications

1. Ensemble structural pour le freinage des rouleaux-supports de conveyeurs à rouleaux, en particulier de transporteurs d'accumulation à rouleaux qui présentent des rouleaux-supports entraînés ou tournant librement, sur lesquels sont transportées des marchandises à l'unité, le cas échéant par actionnement de lames de commutation, qui désengrègent des dispositifs d'entraînement des rouleaux-supports entraînés par eux,
**caractérisé en ce que**
l'ensemble structural (1) présente un porte-lamelle (4) pivotant ou glissant avec au moins une lamelle de freinage (5) agissant sur un rouleau-support (2) qui peut être amené contre un rouleau-support (2) - avec ou sans mise en prise - , que le porte-lamelle (4) présente une zone de réception d'un corps d'essieu (6) et est monté sur le dispositif d'entraînement (3), que la zone de réception du corps d'essieu (6) du porte-lamelles (4) présente une coquille de coussinet (10) qui enveloppe au moins partiellement l'axe de pivotement ou l'axe de basculement (8) du dispositif d'entraînement (3) ou de son carter de pivotement, et que le porte-lamelle (4) présente une multiplicité de zones de réception de lamelles de freinage (7) constituées par plusieurs poches (11) placées l'une derrière l'autre.
